# EUROPÄISCHE PATENTANMELDUNG

(11) **EP 1 475 930 A2**
(43) Veröffentlichungstag der Anmeldung: **10.11.2004**
(21) Anmeldenummer: 04004074.3
(22) Anmeldetag: 23.02.2004
(51) Int. Cl.: H04L 12/66

(54) **Kommunikationsgerät**

(30) Priorität: 05.05.2003 DE 10319975
(71) Anmelder: Fujitsu Siemens Computers GmbH, 80807 München (DE)
(72) Erfinder: Bohnenstengel, Gerd, 88427 Bad Schussenried (DE); Landto, Rüdiger, 86836 Graben (DE)
(74) Vertreter: Epping Hermann & Fischer

(57) **Zusammenfassung**

Die vorliegende Erfindung betrifft ein Kommunikationsgerät mit Schnittstellen, über die Endgeräte zum Informationsaustausch von Sprache und Daten mit unterschiedlichen Protokollen und über unterschiedliche Netzwerktechnologien kommunizieren, wobei das Kommunikationsgerät eine Schnittstelle aufweist, die einen direkten Zugang in öffentliche und/oder nicht öffentliche Telefonfestnetze schaltet.

## Beschreibung

Die vorliegende Erfindung betrifft ein Kommunikationsgerät mit Schnittstellen, über die Endgeräte zum Informationsaustausch von Sprache und Daten mit unterschiedlichen Protokollen und über unterschiedliche Netzwerktechnologien kommunizieren.

Kommunikationsgeräte, die den Anschluß von Endgeräten über aktuelle Netzwerk-Technologien, wie zum Beispiel LAN (Local Area Network), WAN (Wide Area Network), VPN (Virtual Privat Network), WLAN (Wireless Local Area Network) und IP-Telefonie ermöglichen und somit eine Sprach-Daten-Infrastruktur bereitstellen, werden sowohl im Privatbereich als auch in Unternehmen eingesetzt, um die Kommunikationsabläufe zu bewältigen. Zum Betrieb und zur Kommunikation der Endgeräte untereinander verfügen die Kommunikationsgeräte über eine Vielfalt an Software, wie beispielsweise Software für "Bridging", "Switching" oder "Routing" oder Software zur Konfigurartion eines "Firewalls" und sind in der Lage, bekannte Protokolle wie "RIP", "OSPF" "PPP" oder "Voice over IP" zu verarbeiten.

Als Übertragungsmedium kommen im LAN-Netzwerk sowohl Kabel als auch Funkwellen zum Einsatz. Demzufolge sind die Netzwerkteilnehmer mit ihren jeweiligen Endgeräten drahtlos oder fest verdrahtet miteinander verbunden.

Die Kommunikation bzw. der Austausch von Daten erfolgt entweder lokal im internen Netzwerk, dem sogenannten Intranet, über die LAN-Netzwerk-Verbindungen (LAN-Schnittstellen) oder über eine über das Intranet hinausgehende Kommunikation mittels Internetverbindungen (WAN-Schnittstellen).

Ein Telefonnetz basiert auf dem Konzept, daß zwischen zwei Teilnehmern über eine leitungsvermittelte Telefontechnik eine durchgängige und auch unter hoher Belastung sehr zuverlässige Verbindung geschaltet wird. Es ermöglicht die Übertragung von Sprache und zum Teil auch Daten in Echtzeit. Firmenintern wird das Sprachnetz über proprietäre Telefonanlagen (TK-Anlagen/PBX) erweitert.

Statt getrennter Infrastruktur für Datenübertragungsnetze und Sprachübertragungsnetze gibt es seit vielen Jahren Bestrebungen, basierend auf dem Internet-Protokoll, das leistungsvermittelte Sprachnetz und das Datennetz zusammenzuführen, indem eine gemeinsame Infrastruktur zur Übertragung von Sprache und Daten genutzt wird. In diesem Zusammenhang sind am Markt bereits Produkte wie beispielsweise sogenannte IP-Telefone bzw. "Voice over IP" (VoIP)-fähige Telefone oder Computer mit der notwendigen Hardware, um IP-Telefonie zu betreiben, verfügbar, mit denen es ermöglicht ist, innerhalb des Intranets, basierend auf der Dateninfrastruktur, kostenlos zu telefonieren. Da viele Firmen über eine permanente Verbindung ins Internet verfügen oder einfach nur eine Wählverbindung nutzen, kann daher IP-Telefonie mit IP-fähigen Endgeräten auch über das Internet realisiert werden. Um jedoch Gespräche von einem IP-fähigen Telefon mit Telefonen aus dem öffentlichen Telefonfestnetz zu führen, bedarf es eines sogenannten "Gateways". Das "Gateway" ist eine eigenständige Komponente, das die Protokolle der IP-Telefonie und der herkömmlichen Telefontechnologie übersetzt und somit für die Umsetzung der Daten zwischen LAN und Telefonnetz sorgt. Der für die IP-Telefonie maßgebende internationale Standard H.323 baut auf bekannte und eingesetzte Standards auf und definiert für diesen Zweck eine zentrale Komponente, den sogenannten Gatekeeper, der als Verwaltungskomponente Mehrwertdienste integriert und in der Regel der Funktion einer Vermittlungs- oder Telefonanlage entspricht.

Stellt beispielsweise eine Firma ihr hausinternes Telefonnetz auf IP-Telefonie um und benutzt die Dateninfrastruktur, um Gespräche über das Internet in das öffentliche Telefonfestnetz zu übertragen, wird in jedem Fall ein Gateway die Umsetzung in das Telefonfestnetz übernehmen. Wird das Telefonfestnetz innerhalb dieser Übertragung genutzt, um ein IP-fähiges Telefon einer anderen Firma anzuwählen, muß ein weiteres Gateway die Umsetzung übernehmen, um zum Beispiel wiederum über das Internet in das lokale Netzwerk der anderen Firma zu gelangen. Nachteilig ist hier in jedem Fall, daß eine funktionsfähige Internetverbindung verfügbar sein muß als auch die Funktionalität der involvierten Gateways garantiert sein muß. Zudem liegt die Verzögerung der Sprachübertragung über eine Internetverbindung oftmals oberhalb eines bestimmten Grenzwertes, so daß Einbußen in der Sprachqualität zu verzeichnen sind.

Aufgabe der Erfindung ist es, ein Kommunikationsgerät vorzusehen, welches einen direkten Zugang IP-Telefonie-fähiger Endgeräte in öffentliche oder nicht öffentliche Telefonnetze ohne Verwendung zusätzlicher externer Komponenten ermöglicht.

Die Aufgabe wird dadurch gelöst, daß ein Kommunikationsgerät mit Schnittstellen, über die Endgeräte zum Informationsaustausch von Sprache und Daten mit unterschiedlichen Protokollen und über unterschiedliche Netzwerktechnologien kommunizieren, vorgesehen ist, das eine Schnittstelle aufweist, die einen direkten Zugang in öffentliche und/oder nicht öffentliche Telefonfestnetze schaltet.

Das vorgeschlagene Kommunikationsgerät weist den Vorteil auf, daß unterschiedliche Technologien in einem Gerät zusammengeführt und umgesetzt werden, so daß eine Kopplung der IP-Telefonie mit Telefonen öffentlicher oder nicht öffentlicher Telefonfestnetze erzielt wird, ohne daß ein Internet-Serviceprovider zwischengeschaltet werden muß. Es besteht somit ein direkter Anschluß an das öffentliche bzw. nicht öffentliche Telefonnetz, ohne weitere Zusatzgeräte wie TK-Anlagen oder Gateways einzusetzen.

Dadurch, daß das Kommunikationsgerät über LAN-, WLAN-, WANoder USB-Schnittstellen verfügt, können beliebige Endgeräte angeschlossen werden und untereinander bzw. über das Gerät miteinander kommunizieren. Endgeräte, die mit einer entsprechenden Hard- und IP-Telefonie-Software ausgestattet sind, nutzen beim Telefonieren innerhalb des Intranets die gegebenen Netzwerkinfrastrukturen, sind jedoch in der Lage, jederzeit einen direkten Zugang in das Telefonfestnetz über das Kommunikationsgerät zu erlangen und ein Gespräch mit einem Teilnehmer des öffentlichen oder nicht öffentlichen Telefonfestnetzes zu führen. Dies ist insbesondere dann wichtig, wenn aufgrund eines technischen Problems seitens der internen Schnittstelle zum Internet oder seitens des Providers eine Internetverbindung zur Weiterleitung des Gesprächs nicht oder verzögert aufgebaut werden kann.

Besonders vorteilhaft ist es, daß in die Schnittstelle die Funktionalität einer Telekommunikationsanlage integriert ist. Sie weist in der Regel einen Router auf, der das öffentliche Telefonnetz mit dem LAN/WAN verbindet und einen Gatekeeper, der für die Verbindung zum gewünschten Endgerät sorgt.

Die Erfindung wird nachfolgend anhand eines Ausführungsbeispiels näher erläutert. Es zeigt:

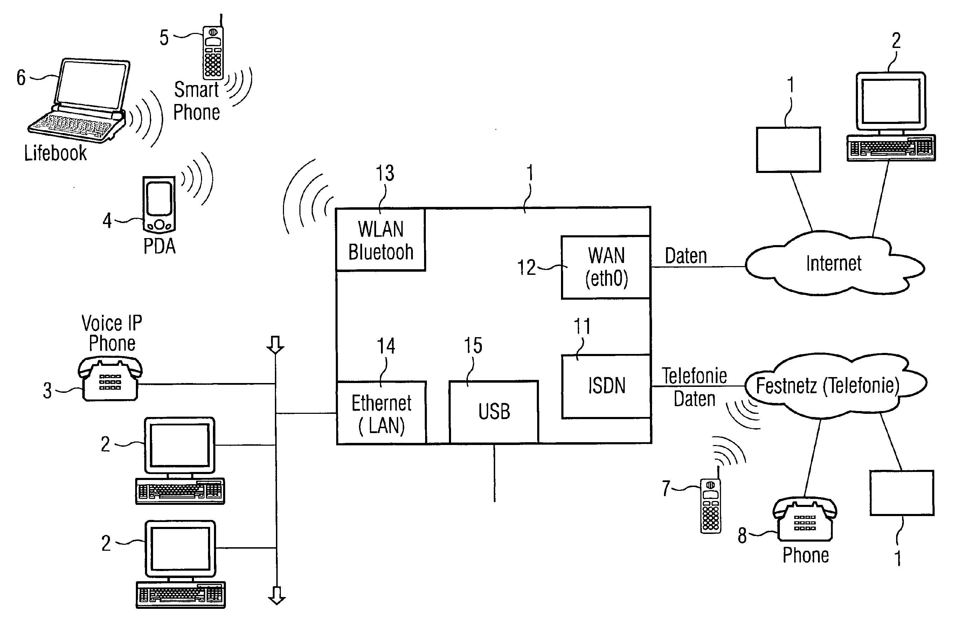

- Figur 1: ein erfindungsgemäßes Kommunikationsgerät mit Anschlußmöglichkeiten für Endgeräte.

In der Figur 1 ist das erfindungsgemäße Kommunikationsgerät 1 dargestellt, sowie eine Auswahl an Endgeräten, die über Schnittstellen an das Kommunikationsgerät 1 angebunden sind und über das Kommunikationsgerät 1 Informationen austauschen. Das Kommunikationsgerät 1 weist eine LAN-Schnittstelle 14 auf, an die über Kabel zwei Computer 2 und ein IP-Telefon 3 angeschlossen sind. Über die im Kommunikationsgerät 1 angeordnete WLAN-Schnittstelle 13 können die eine Wireless-LAN-Karte aufweisenden Endgeräte, wie ein hier dargestelltes Smart-Phone 5, ein Organizer 4 oder ein Notebook 6 kabellos über Funk Daten untereinander aber auch Daten mit den im LAN befindlichen festverdrahteten Komponenten 2, 3 austauschen. Die WAN-Schnittstelle 12 ermöglicht über eine Wählverbindung mittels eines Modems oder eines ISDN-Adapters oder über eine in der Regel gemietete Festverbindung einen Zugang ins Internet. Weitere USB-Schnittstellen aufweisende Endgeräte können an die USB-Schnittstelle 15 des Kommunikationsgerätes 1 angeschlossen werden und über alle Schnittstellen 12, 13, 14 angesprochen werden. Die über das LAN bzw. WLAN am Kommunikationsgerät 1 angebundenen Endgeräte 2, 3, 4, 5, 6 können über die WAN-Schnittstelle 12 eine Verbindung in das Internet aufbauen und Internet-Dienste wie Email oder das World Wide Web nutzen. IP-fähige Telefone 3 sowie Endgeräte mit IP-Telefonie-Funktionalität können über das interne Intranet Gespräche führen, aber auch über das Internet eine Kommunikation mit IP-fähigen Telefonen und Endgeräten mit IP-Telefonie-Funktionalität aufbauen, ohne das Telefonfestnetz zu nutzen. Um jedoch Gespräche mit Telefonen 7, 8 des Telefonfestnetzes führen zu können, muß bei einer Kommunikation über das Internet das Gespräch an ein Gateway geroutet werden, welches dann eine Umsetzung der Daten des LAN's in das Telefonfestnetz vornimmt. Ausgehend vom Intranet können Gespräche auch über ein lokales Gateway, beispielsweise in Form einer Telekommunikationsanlage in das Telefonfestnetz geführt werden. Die weitere im Kommunikationsgerät 1 angeordnete Schnittstelle 11 ermöglicht jedoch eine direkten Zugang in das Telefonnetz, ohne daß eine Telefonanlage oder ein Gateway zwischengeschaltet werden muß. Die Schnittstelle kann die Funktionalität einer Telekommunikationsanlage aufweisen, die den Übergang in das Telefonnetz steuert und sämtliche Mehrwertdienste einer normalen Telefonanlage anbieten. Somit kann bei Störungen der WAN-Schnittstelle oder des Internets jederzeit ein Teilnehmer im Telefonfestnetz ohne zusätzliche Geräte oder durch Nutzung der Internetverbindung erreicht werden.

Eine separate Telefonanlagenadministration entfällt. Die integrierte Schnittstelle im Kommunikationsgerät erlaubt eine vielseitige und flexible Verwendung. Wie in der Figur 1 dargestellt, kann das Kommunikationsgerät auch einen beliebigen Zugangspunkt innerhalb des Telefonfestnetzes oder des Internets darstellen, so daß jeweils ein Übergang von IP-Daten zum Telefonfestnetz und umgekehrt realisiert werden kann.

### Bezugszeichenliste

- 1: Kommunikationsgerät
- 2: Computer
- 3: IP-Telefon
- 4: Organizer
- 5: Notebook
- 6: Smart Phone
- 7: Handy
- 8: Telefon
- 11: Schnittstelle
- 12: WAN-Schnittstelle
- 13: WLAN-Schnittstelle
- 14: LAN-Schnittstelle

## Patentansprüche

1. Kommunikationsgerät (1) mit Schnittstellen (12, 13, 14,15), über die Endgeräte zum Informationsaustausch von Sprache und Daten mit unterschiedlichen Protokollen und über unterschiedliche Netzwerktechnologien kommunizieren,
**dadurch gekennzeichnet, daß**
das Kommunikationsgerät (1) eine Schnittstelle (11) aufweist, die einen direkten Zugang in öffentliche und/oder nicht öffentliche Telefonfestnetze schaltet.

2. Kommunikationsgerät nach Anspruch 1,
**dadurch gekennzeichnet, daß**
das Kommunikationsgerät (1) eine LAN- (14) (Local Area Network), und/oder WLAN- (13) (Wireless Local Area Network) und/oder WAN- (12) (Wide Area Network) und/oder USB- (15) (Universal Serial Bus) Schnittstelle aufweist.

3. Kommunikationsgerät (1) nach Anspruch 1,
**dadurch gekennzeichnet, daß**
in die Schnittstelle (11) die Funktionalität einer Telekommunikationsanlage integriert ist.

4. Kommunikationsgerät (1) nach Anspruch 1,
**dadurch gekennzeichnet, daß**
die Schnittstelle (11) eine ISDN- (Integrated Services Digital Network) Schnittstelle ist.

5. Kommunikationsgerät (1) nach Anspruch 1,
**dadurch gekennzeichnet, daß**
die Schnittstelle (11) eine analoge Schnittstelle ist.
